# FASCICULE DE BREVET EUROPEEN

(11) **EP 2 350 580 B1**
(45) Date de publication et mention de la délivrance du brevet: **26.09.2012**
(21) Numéro de dépôt: 09755925.6
(22) Date de dépôt: 16.10.2009
(51) Int. Cl.: G01F 23/24

(54) **DISPOSITIF DE MESURE DE NIVEAU DE LIQUIDE**
EINRICHTUNG ZUR MESSUNG EINES FLÜSSIGKEITSSTANDS
DEVICE FOR MEASURING A LIQUID LEVEL

(30) Priorité: 21.10.2008 FR 0805818
(43) Date de publication de la demande: 03.08.2011
(73) Titulaire: SC2N, 94000 Créteil (FR)
(72) Inventeur: LE BOUQUIN, Dominique, F-14200 Herouville Saint Clair (FR); GODERNEAUX, Pierre, F-14320 Chinchamps sur Orne (FR)
(74) Mandataire: de Lambilly Delorme, Marie Pierre
(86) Numéro de dépôt international: PCT/FR2009/001218
(87) Numéro de publication internationale: WO 2010/046555

(56) Documents cités:
- EP-A- 0 043 312
- EP-A- 0 209 458
- FR-A- 2 674 953
- FR-A- 2 707 004

## Description

La présente invention concerne un dispositif de mesure de niveau de liquide et en particulier la détection du niveau d'un liquide dans un véhicule automobile, comme par exemple le niveau d'huile de carter, de la boîte de vitesses ou du liquide de refroidissement du circuit de refroidissement, du circuit de climatisation ou le niveau du réservoir d'essence ou de gazole.

Le contrôle du niveau de liquide dans le domaine automobile est une préoccupation permanente, car il en dépend le bon fonctionnement du véhicule, voir la sécurité des utilisateurs.

La Demanderesse a développé des dispositifs et capteurs pour la détection d'un niveau de liquide fonctionnant sur la technique du fil chaud. A titre d'exemple, on peut citer les brevets publiés sous les références FR 2690521 et FR 2901877.

Comme représenté sur la fig.1 ou comme décrit dans le brevet FR 2674953, ces dispositifs et capteurs comportent de manière générale une sonde résistive 1 qui, à l'état monté sur le véhicule est partiellement immergée dans le liquide à surveiller. Cette sonde est réalisée sous forme d'un fil électriquement résistif 3 qui s'échauffe lorsqu'il est parcouru par un courant du fait que la résistivité présente un coefficient élevé de température. Le plus souvent, les sondes sont formées par un fil très fin en métal à base de nickel chrome, plié à mi-longueur pour former deux brins parallèles portés par un support électriquement isolant 5.

La sonde est reliée à une alimentation électrique, en général une alimentation en courant pulsé. Une électronique de traitement relève la tension aux bornes de la sonde pour suivre celle-ci, et en particulier son évolution dans le temps, jusqu'à ce que la sonde ait approché son état de stabilité thermique.

Pour ces sondes, on exploite l'effet que la résistivité de la sonde augmente en fonction de sa température du fait de son coefficient de température positif.

L'augmentation en température dépend de la masse thermique du fil, de l'énergie apportée, de la température initiale et des échanges thermiques avec l'environnement, en particulier les échanges thermiques avec l'air pour la partie émergée de la sonde et le liquide pour la partie immergée de la sonde.

Par conséquent, la variation de la résistance et donc de la tension aux bornes de la sonde entre le début et la fin d'un pulse de courant alimentant la sonde dépend du niveau de liquide. En exploitant l'accroissement de la tension au fil du temps par une électronique d'exploitation, on connaît le niveau de liquide dans le réservoir.

En effet, si le niveau de liquide dans son réservoir est élevé, la sonde est plus refroidie et l'augmentation de la température et donc de la résistance est plus faible. A l'inverse, si le niveau est faible, la sonde est moins refroidie et l'augmentation de la température et donc de la résistance est plus forte.

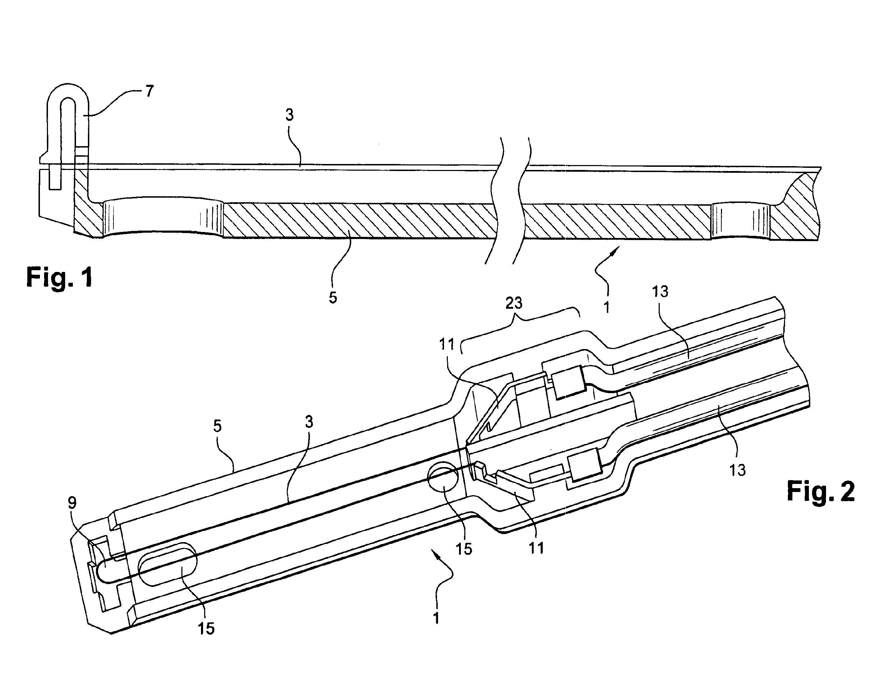

Pour assurer un bon fonctionnement, il est nécessaire que le fil soit tendu. Dans l'état de la technique, comme représenté sur la Fig.1, cette tension est réalisée par un support élastique 7 en matière plastique ayant la forme générale d'un U.

Toutefois, il a été constaté que lorsque le capteur est exposé à des températures élevées (de l'ordre de 160°C), la tension mécanique appliquée au fil diminue du fait d'une déformation thermique du support élastique. De plus un phénomène de fluage du support élastique peut intervenir, entraînant une perte irréversible de l'élasticité dudit support 7. Cette réduction de la tension mécanique du fil peut avoir des conséquences négatives pour le résultat de mesure du niveau de liquide.
La présente invention vise à résoudre les inconvénients précités de l'état de la technique et optimiser l'efficacité d'un tel capteur.

A cet effet, la présente invention a pour objet un dispositif de mesure d'un niveau de liquide comprenant:
- un boîtier allongé en deux parties assemblées, présentant au moins une ouverture permettant à un liquide de pénétrer dans ledit boîtier,
- une boucle d'un fil résistif disposée dans le boîtier et destinée à être partiellement immergée dans le liquide à surveiller, ladite boucle étant enroulée autour d'une excroissance du boîtier,
- deux pièces métalliques de connexion mécanique et électrique du fil résistif,
dans lequel au moins une desdites pièces métalliques de connexion mécanique et électrique présente un pliage assurant par sa flexion la tension du fil résistif dans le boîtier.

Avantageusement, ladite excroissance est située à une extrémité du boîtier et les pièces métalliques de connexion se trouvent dans la partie opposée du boîtier.

Alternativement, lesdites deux pièces métalliques de connexion sont de forme allongée et comportent une première partie comprenant un moyen de fixation à un fil électrique à son extrémité et une seconde partie flexible comprenant une encoche destinée à permettre l'attachement d'un fil résistif, lesdites pièces métalliques étant pliées en leur milieu dans le sens de leur largeur.

Préférentiellement, les deux pièces métalliques de connexion sont identiques et montées symétriquement par rapport à l'axe longitudinal dudit boîtier.

Alternativement, les parties flexibles desdites deux pièces métalliques de connexion sont orientées vers l'intérieur du dispositif.

Avantageusement, le fil résistif comporte un coefficient de température élevé.
- La figure 1 représente un schéma d'un dispositif de mesure d'un niveau de liquide comportant un fil chaud selon l'état de la technique;
- La figure 2 représente un schéma d'un dispositif de mesure d'un niveau de liquide comportant un fil chaud selon la présente invention;
- La figure 3 représente le fil résistif ainsi que les pièces métalliques de connexion selon la présente invention;
- La figure 4 représente une pièce de connexion selon la présente invention;

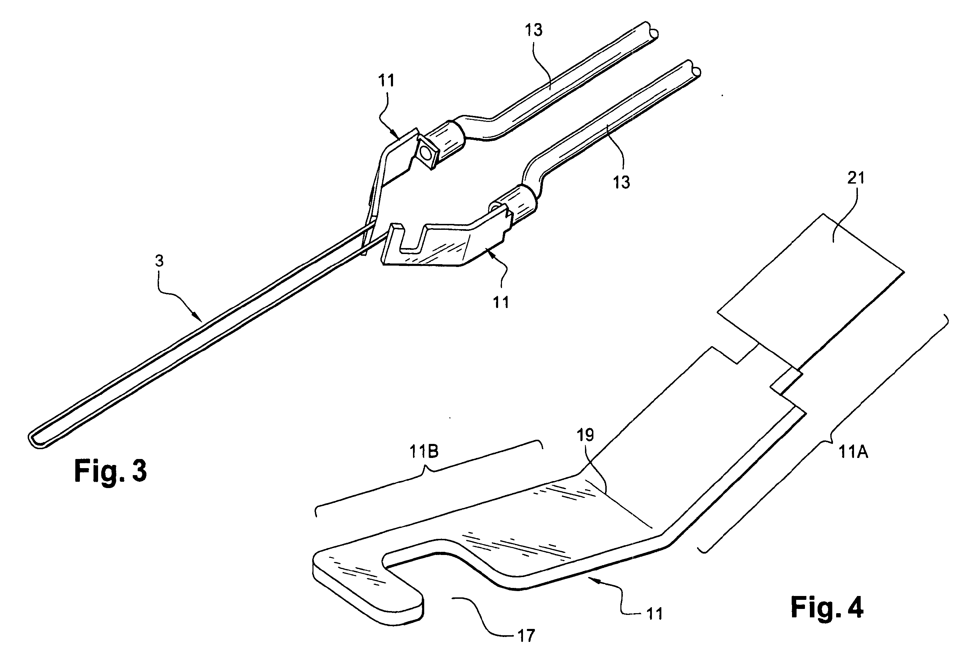

Sur la figure 2, on a représenté un mode de réalisation de la partie sensible d'un dispositif 1 de mesure d'un niveau de liquide selon l'invention. Le boîtier 5 est formé de deux demi-coques formant à l'état assemblé un cylindre destiné à être plongé dans le liquide à mesurer. Le boîtier 5 est réalisé dans un matériau électriquement isolant, de préférence en matière plastique. Il comprend des ouvertures 15 permettant au liquide de pénétrer dans le boîtier et d'être en contact avec le fil résistif 3 ainsi qu'un bourrelet 23 destiné à recevoir des pièces de connexion 11. Le fil résistif 3 est enroulé au niveau de l'extrémité du dispositif autour d'une excroissance 9 du boîtier 5. Les extrémités du fil résistif 3 sont reliées, par exemple par soudure, à deux pièces de connexion 11 qui assurent la liaison avec deux fils électriques 13. Sur la Fig.3, le boîtier 5 n'est pas représenté ce qui permet de mieux voir la disposition de l'élément sensible formé par le fil résistif 3 et sa fixation sur les pièces de connexion 11. Le détail concernant la géométrie d'une pièce de connexion 11 est donné par la fig. 4. Ladite pièce de connexion 11 est de forme longiligne et est cintrée en son milieu au niveau d'un pli 19 qui divise la pièce en deux parties. Une première partie 11 A, destinée à être fixée au support et comprenant à son extrémité une patte de connexion 21 permettant le contact avec un fil électrique 13, et une deuxième partie 11B comportant une encoche 17 destinée à recevoir l'extrémité du fil résistif 3 et permettre sa fixation. Le pli 19 permet ainsi la flexibilité de la partie 11B. Les deux pièces de connexion 11 sont identiques et montées de façon symétrique dans le boîtier 5. De plus, lesdites pièces de connexion 11 sont métalliques ce qui permet d'éviter tout effet de fluage et leur positionnement éloigné de l'extrémité du dispositif de mesure 1 permet de limiter l'effet des contraintes extérieures (vibrations, déformations,...) sur la tension du fil. De plus, le cintrage des pièces de connexion 11 est orienté vers l'intérieur du dispositif de mesure 1 de manière à garder les deux parties du fil résistif parallèles.

Ainsi, la présente invention permet de maintenir la tension du fil résistif 3 à des températures élevées et en présence de contraintes mécaniques extérieures et permet donc de d'obtenir une information fiable concernant le niveau d'huile même dans les conditions extrêmes d'utilisation.

## Revendications

1. Dispositif de mesure (1) d'un niveau de liquide comprenant:
- un boîtier allongé (5) en deux parties assemblées, présentant au moins une ouverture (15) permettant à un liquide de pénétrer dans ledit boîtier,
- une boucle d'un fil résistif (3) disposée dans le boîtier et destinée à être partiellement immergée dans le liquide à surveiller, ladite boucle étant enroulée autour d'une excroissance du boîtier (9),
- deux pièces métalliques de connexion mécanique et électrique (11) du fil résistif (3), **caractérisé en ce qu'**au moins une desdites pièces métalliques de connexion mécanique et électrique (11) présente un pliage (19) assurant par sa flexion la tension du fil résistif (3) dans le boîtier (5).

2. Dispositif de mesure de niveau de liquide (1) selon la revendication 1, **caractérisé en ce que** ladite excroissance (9) est située à une extrémité du boîtier (5) et **en ce que** les pièces métalliques de connexion (11) se trouvent dans la partie opposée du boîtier (5).

3. Dispositif de mesure de niveau de liquide (1) selon la revendication 1 ou 2, **caractérisé en ce que** lesdites deux pièces métalliques de connexion (11) sont de forme allongée et comportent une première partie (11A) comprenant un moyen de fixation à un fil électrique (13) à son extrémité, une seconde partie flexible (11B) comprenant une encoche (17) destinée à permettre l'attachement d'un fil résistif (3), lesdites pièces métalliques (11) étant pliées en leur milieu dans le sens de leur largeur.

4. Dispositif de mesure de niveau de liquide (1) selon la revendication 3, **caractérisé en ce que** les deux pièces métalliques de connexion (11) sont identiques et montées symétriquement par rapport à l'axe longitudinal dudit boîtier (5).

5. Dispositif de mesure de niveau de liquide (1) selon la revendication 4, **caractérisé en ce que** les parties flexibles (11B) desdites deux pièces métalliques de connexion (11) sont orientées vers l'intérieur du dispositif (1).

6. Dispositif de mesure de niveau de liquide (1) selon l'une des revendications précédentes **caractérisé en ce que** le fil résistif (3) comporte un coefficient de température élevé.

## Claims

1. Liquid level measurement device (1) comprising:
- an elongate casing (5) made of two assembled parts, having at least one opening (15) allowing a liquid to enter the said casing,
- a resistive-wire loop (3) arranged inside the casing and intended to be partially immersed in the liquid that is to be monitored, said loop being wound around an outgrowth of the casing (9),
- two metallic mechanical and electrical connection pieces (11) for mechanically and electrically connecting the resistive wire (3), **characterized in that** at least one of the said metallic mechanical and electrical connection pieces (11) has a fold (19) which, by flexing, tensions the resistive wire (3) in the casing (5).

2. Liquid level measurement device (1) according to Claim 1, **characterized in that** the said outgrowth (9) is situated at one end of the casing (5) and **in that** the metallic connection pieces (11) are situated in the opposite part of the casing (5).

3. Liquid level measurement device (1) according to Claim 1 or 2, **characterized in that** the said two metallic connection pieces (11) are of elongate shape and comprise a first part (11A) comprising a means of attachment to an electric wire (13) at its end, a flexible second part (11B) comprising a notch (17) intended to allow the attachment of a resistive wire (3), said metallic pieces (11) being bent in their middle in their widthwise direction.

4. Liquid level measurement device (1) according to Claim 3, **characterized in that** the two metallic connection pieces (11) are identical and are mounted symmetrically about the longitudinal axis of the said casing (5).

5. Liquid level measurement device (1) according to Claim 4, **characterized in that** the flexible parts (11B) of the said two metallic connection pieces (11) are oriented towards the inside of the device (1).

6. Liquid level measurement device (1) according to one of the preceding claims, **characterized in that** the resistive wire (3) has a high temperature coefficient.

## Patentansprüche

1. Vorrichtung zur Messung (1) eines Flüssigkeitsstands, die enthält:
- ein längliches Gehäuse (5) aus zwei zusammengebauten Teilen, das mindestens eine Öffnung (15) aufweist, die das Eindringen einer Flüssigkeit in das Gehäuse erlaubt,
- eine Schleife eines Widerstandsdrahts (3), die im Gehäuse angeordnet und dazu bestimmt ist, teilweise in die zu überwachende Flüssigkeit eingetaucht zu werden, wobei die Schleife um eine Ausstülpung des Gehäuses (9) gewickelt ist,
- zwei metallische Bauteile zur mechanischen und elektrischen Verbindung (11) des Widerstandsdrahts (3),
**dadurch gekennzeichnet, dass** mindestens eines der metallischen Bauteile zur mechanischen und elektrischen Verbindung (11) einen Knick (19) aufweist, der durch seine Biegung die Spannung des Widerstandsdrahts (3) im Gehäuse (5) gewährleistet.

2. Vorrichtung zur Flüssigkeitsstandmessung (1) nach Anspruch 1, **dadurch gekennzeichnet, dass** die Ausstülpung (9) sich an einem Ende des Gehäuses (5) befindet, und dass die metallischen Verbindungsbauteile (11) sich im gegenüberliegenden Teil des Gehäuses (5) befinden.

3. Vorrichtung zur Flüssigkeitsstandmessung (1) nach Anspruch 1 oder 2, **dadurch gekennzeichnet, dass** die zwei metallischen Verbindungsbauteile (11) eine längliche Form haben und einen ersten Teil (11A), der eine Befestigungseinrichtung an einem elektrischen Draht (13) an seinem Ende enthält, und einen zweiten biegsamen Teil (11B) aufweisen, der eine Kerbe (17) enthält, die dazu bestimmt ist, die Befestigung eines Widerstandsdrahts (3) zu erlauben, wobei die metallischen Bauteile (11) in ihrer Mitte in Richtung ihrer Breite eingeknickt sind.

4. Vorrichtung zur Flüssigkeitsstandmessung (1) nach Anspruch 3, **dadurch gekennzeichnet, dass** die zwei metallischen Verbindungsbauteile (11) gleich und symmetrisch bezüglich der Längsachse des Gehäuses (5) montiert sind.

5. Vorrichtung zur Flüssigkeitsstandmessung (1) nach Anspruch 4, **dadurch gekennzeichnet, dass** die biegsamen Teile (11B) der zwei metallischen Verbindungsbauteile (11) zur Innenseite der Vorrichtung (1) ausgerichtet sind.

6. Vorrichtung zur Flüssigkeitsstandmessung (1) nach einem der vorhergehenden Ansprüche, **dadurch gekennzeichnet, dass** der Widerstandsdraht (3) einen hohen Temperaturkoeffizient aufweist.
